Europäisches Patentamt

European Patent Office

Office européen des brevets

(19)

(11) **EP 1 507 346 B1**

(12) **EUROPEAN PATENT SPECIFICATION**

(45) Date of publication and mention
of the grant of the patent:
**21.06.2006 Bulletin 2006/25**

(51) Int Cl.:
***H04B 10/18*** *(2006.01)*

(21) Application number: **04254519.4**

(22) Date of filing: **28.07.2004**

(54) **System and method for multi-channel mitigation of PMD/PDL/PDG**

System und Verfahren zur Verbesserung der polarisationsabhängigen Dispersion, Dämpfung und Verstärkung

Système et procédé pour reduire la dispersion, l'attenuation et le gain à dependance de la dispersion

(84) Designated Contracting States:
**DE FR GB**

(30) Priority: **13.08.2003 US 639824**

(43) Date of publication of application:
**16.02.2005 Bulletin 2005/07**

(73) Proprietor: **LUCENT TECHNOLOGIES INC.**
**Murray Hill, New Jersey 07974-0636 (US)**

(72) Inventors:
• **De Lind Van Wijngaarden, Adriaaen J.**
**New Providence, NJ 07974 (US)**
• **Liu, Xiang**
**Marlboro, NJ 07746 (US)**
• **Xie, Chongjin**
**Morganville, NJ 07751 (US)**

(74) Representative: **Sarup, David Alexander et al**
**Lucent Technologies NS UK Limited**
**5 Mornington Road**
**Woodford Green, Essex IG8 0TU (GB)**

(56) References cited:
**US-B1- 6 437 892**

• **HAUNSTEIN B F ET AL: "Ber measurements of a 40gb/s receiver with adaptive threshold using polarization scrambling" IEEE 2003 DIGEST OF THE LEOS SUMMER TOPICS MEETINGS, 14 July 2003 (2003-07-14), pages 17-18, XP010653538 PISCATAWAY, NJ, USA**

EP 1 507 346 B1

**Description**

The present invention relates to optical communications, and more specifically to a system and method for mitigating the penalties resulting from polarization-mode-dispersion (PMD), polarization-dependent loss (PDL), and polarization-dependent gain (PDG) in optical communication systems.

**Background of the Invention**

Polarization-mode-dispersion (PMD) is a common phenomenon that occurs when light waves travel in optical media such as optical fiber and optical amplifiers. PMD occurs in an optical fiber as a result of small birefringence induced by deviations of the fiber's core from a perfectly cylindrical shape, asymmetric stresses or strains, and/or random external forces acting upon the fiber. PMD causes the two orthogonal polarization components of an optical signal corresponding to two principle states of polarization (PSP) of a transmission link to travel at different speeds and arrive at a receiver with a differential group delay (DGD). As a result, the waveform of optical signals may be significantly distorted, resulting in more frequent errors at the receiver.

PMD is wavelength-dependent in that the amount or level of PMD imparted by an optical component (e.g., optical fiber) at a given time will generally vary for different wavelength-division-multiplexing (WDM) channels corresponding to different signal wavelengths or frequencies.

Polarization-dependent loss (PDL) is another common phenomenon in optical fiber transmission. Optical components such optical add/drop modules (OADM's) tend to have PDL, which attenuate optical signals depending on the relative polarization state with respect to the PSP's of the PDL component.

Polarization-dependent gain (PDG) is also a common phenomenon in optical fiber transmission. Optical components such as Erbium-doped fiber amplifiers (EDFAs), tend to have PDG, which amplify optical signals depending on their relative polarization state with respect to the PSPs of the PDG component. PDL and PDG cause signals to have different amplitudes at the receiver, which makes the optimal decision threshold different for different bits (depending on their polarization), and thus degrades the receiver performance when the receiver decision threshold can only be fixed to a certain level for all the bits. PDL may also cause varying optical signal-to-noise-ratio (OSNR) for bits with different polarization, and further degrade the system performance. PDL or PDG induced OSNR degradation cannot be compensated for since the process of adding random amplified spontaneous emission (ASE) noise cannot be undone.

It is known that PMD, PDL, and PDG are significant penalty sources in high-speed (e.g., 10 Gb/s and 40 Gb/s) transmissions. PMD compensation (PMDC) is normally desirable to increase system tolerance to PMD. However, due to the stochastic nature of PMD and its wavelength dependence, PMDC is normally required to be implemented for each wavelength channel individually, and is thus generally not cost-effective. Various prior art methods have been proposed to achieve PMDC simultaneously for multiple WDM channels. Channel switching is one technique that has been proposed to mitigate the overall PMD penalty in a WDM system. However, such systems sacrifice system capacity due to the use of extra channels for PMD protection. Multi-channel PMDC before wavelength demultiplexing has also been proposed to mitigate the PMD degradation in the WDM channel having the most severe PMD. However, such a mitigation scheme may cause degradation of other channels.

Another scheme for a multi-channel shared PMDC has been proposed in which the most degraded channel is switched, by optical or electrical means, to a path connected to the shared PMDC; however, the speed of PMDC is limited (by the speed of the optical or electrical switching). In current PMDC schemes, PMD induced system outages, during which the PMD penalty exceeds its pre-allocated system margin and system failure occurs, are present, though reduced.

Forward-error-correction (FEC) is an effective technique for increasing system margin cost-effectively. It has been determined, however, that FEC cannot extend the tolerable PMD for a fixed PMD penalty at a given average bit-error-rate (BER), even though the additional margin provided by FEC can be used to increase the PMD tolerance. It has been suggested that sufficient interleaving in FEC may increase PMD tolerance. However, there is no known practical method to provide the deep interleaving needed to avoid a PMD outage which may last minutes or longer in practical systems.

US-B-6 437 892 discloses a system for reducing the influence of polarization mode dispersion in high-speed fiber optical transmission channels. The patent discloses methods and apparatus for varying the input polarization using a polarization modulator to vary the polarization state of an optical signal before transmission of the optical signal.

Haunstein, B. F. et al., "BER Measurements of a 40 Gb/s Receiver With Adaptive Threshold Using Polarization Scrambling", IEEE 2003 Digest of the LEOS Summer Topics Meetings, 14 July 2003, pp 17-18, discloses a polarization scrambling scheme for quantifying the penalties of polarization depending effects in optical receivers. The publication suggests that polarization scrambling at different speeds will cause different results for BER (or penalty), when the decision threshold is set dynamically.

EP 1 507 346 B1

## Summary of the Intention

A system, method and apparatus according to the invention are as set out in the independent claims. Preferred forms are set out in the dependent claims.

The present invention provides a system and method for multi-channel PMD/PDL/PDG mitigation and outage prevention in which FEC is used in conjunction with sub-burst-error-correction-period (s-BECP) PMD vector scrambling (PMDS) using distributed, fast polarization scramblers (D-FPSs). BECP is in units of time, which equals burst error correction length (BECL) multiplied by the bit period. For ITU standard G.709, BECL = 1024 bits. Thus, in a G.709 standardized 10.7-Gb/s system, the BECP is approximately 1024 x 100 ps $\approx 0.1\mu$s. The link PMD is preferably changed to at least two random states within each BECP simultaneously for all wavelength channels. By limiting PMD induced "outages" to last for a period that is shorter than the correcting period, FEC can effectively correct the dominating errors occurring during transmission. The present invention provides significant improvement in system tolerance to PMD and can essentially eliminate PMD induced system outages in NRZ and RZ transmissions.

According to one embodiment, the present invention is a system for mitigating the penalties from PMD, PDL and PDG. The system comprises at least one polarization scrambler adopted to vary the polarization state of an optical signal to effectively vary the polarization mode dispersion experienced by the signal at least once during each BECP of the FEC used in the system.

## Brief Description of the Drawing

The foregoing and other objects, features and advantages of the present invention will become more apparent from the following detailed description when taken in conjunction with the appended drawings.

It is to be noted, however, that the appended drawings illustrate only exemplary embodiments of the invention and are therefore not to be considered limiting of the scope of the invention.

FIGS. 1A-D are plots illustrating a working principle of an embodiment of the present invention;

FIG. 2 is a diagram depicting one embodiment of a system according to the invention;

FIGS. 3A-D are plots showing the Maxwellian distribution of a link DGD; the link DGD distributions during an outage event with one FPS in the middle of the link; and the DGD distributions of the first and second half of the link during the outage, respectively;

FIGS. 4A-B are plots showing the distribution of the link DGD distributions during an outage with 2 and 6 D-FPSs, respectively;

FIG. 5 is a plot showing the outage probability (OP) vs. the number of D-FPSs assuming idealized PMD scrambling (dotted line) and with insufficient scrambling speed (dashed line);

FIG. 6 is a plot showing the relative required OSNR to achieve BER=$10^{-15}$ as a function of PMD without FEC (circles), with FEC and no D-FPSs (squares), and with FEC and D-FPSs (diamonds); and

FIG. 7 is a plot showing the dependence of corrected BER (by FEC) on uncorrected BER.

## Detailed Description of the Invention

One aspect of the present invention proposes the use of FEC in conjunction with fast polarization scrambling to change the polarization of a signal between at least two states during each FEC burst-error-correcting period (BECP). By changing the link PMD at least once during each BECP the PMD induced "outages" are effectively limited to last for a period that is shorter than the correcting period, thus the FEC can effectively correct the dominating errors that occurred during the outages, and thereby improve system tolerance to PMD and prevent system outage, simultaneously for all wavelength channels

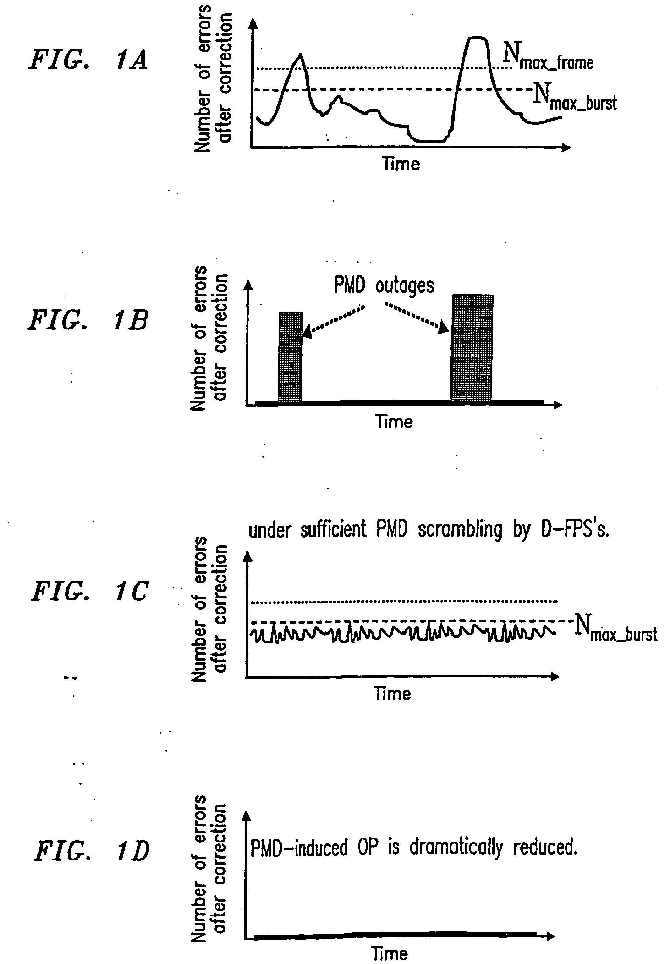

FIGS. 1A-D illustrate a working principle of present invention. FIGS. 1A-B show the case without D-FPSs. As shown in FIGS. 1A-B, PMD occasionally causes severe signal waveform distortion, which results in consecutive or very frequent errors. Such PMD-induced distortion can last from milliseconds up to minutes.

For any given FEC code, there is a maximum number of correctable errors per FEC frame (or block), $N_{max\_frame}$. There is also a maximum number of correctable consecutive burst errors per FEC frame, $N_{max\_burst}$, (which is referred to herein as the BECL, and is generally less or equal to $N_{max\_frame}$). FEC is unable to correct the errors (and may even generate more errors) when the errors occur so frequently that during each FEC frame period (normally on the order of microseconds) the number of errors exceeds $N_{max\_frame}$, or occur consecutively for more than $N_{max\_burst}$ times. These events, during which a system fails (even with an allocated margin) because of PMD, are called PMD-induced outage events, as illustrated in FIG. 1B.

Using D-FPSs, in accordance with aspects of the present invention, to scramble the link PMD during each FEC frame, redistributes the link PMD to close to its original Maxwellian distribution, such that no consecutive errors (due to PMD) last longer than $N_{max\_burst}$, as shown in FIG. 1C. By doing so, the errors are substantially uniformly distributed when looking at a time resolution of an FEC frame period, and can thus be effectively corrected by FEC, providing an appropriate system margin is allocated for PMD. It can be understood that the total number of errors (before FEC correction) over an infinite time period will be the same for the two cases without and with D-FPSs. The redistribution of the link PMD effectively enables FEC to correct errors during what would otherwise be a PMD outage event.

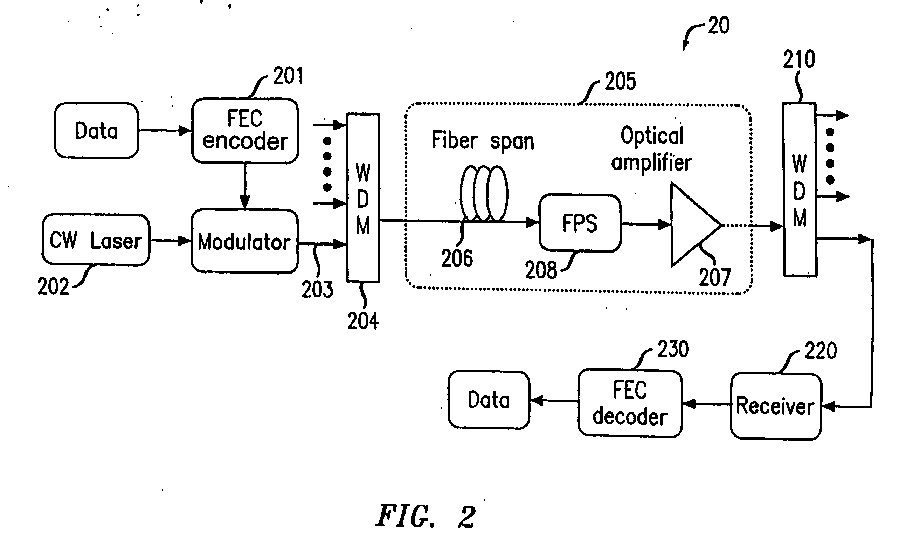

One embodiment of a system 20 in accordance with the invention is shown in FIG. 2. In operation, a high-speed signal (e.g., OC192) is first FEC encoded by an FEC encoder 201, and then used to modulate light from a light source 202, forming a wavelength channel 203. A plurality of channels are multiplexed in a wavelength-division-multiplexer (WDM) 204 and transmitted through a transmission link which comprises one or more transmission spans 205. The transmission spans 205 preferably comprise one or more transmission fiber spans 206, one or more optical amplifiers 207 (e.g., EDFAs), and, if necessary, dispersion compensating modules (DCMs, not shown).

In the embodiment shown in FIG. 2, a fast polarization scrambler (FPS) 208 is positioned within the span 205. It can be understood by those skilled in the art that one or more FPSs 208 can be distributed along a link. (e.g., they can be added in one or more of the amplified spans 205). Preferably the FPSs 208 are positioned along the link where the signal power is relatively high (e.g., after an optical amplifier) so that the OSNR degradation due to the loss from the FPSs is substantially minimized. It is also preferred that the FPSs 208 are uniformly distributed along the link (e.g., spaced along the link based on PMD values of the spans within the link) so that the link PMD is more effectively redistributed.

The FPS 208 can be a single-stage $LiNbO_3$ based phase modulator, or any other device, such as a fiber-based scrambler, that provides sufficient polarization scrambling. Preferably, multiple stages of polarization scrambling are employed to be able to randomize signal polarization, independent of the input signal polarization state.

At a receiver side of the system 20, WDM channels are de-multiplexed by demultiplexer 210 and then individually detected at a receiver 220, followed by FEC decoding with an FEC decoder 230 to obtain the original data signal.

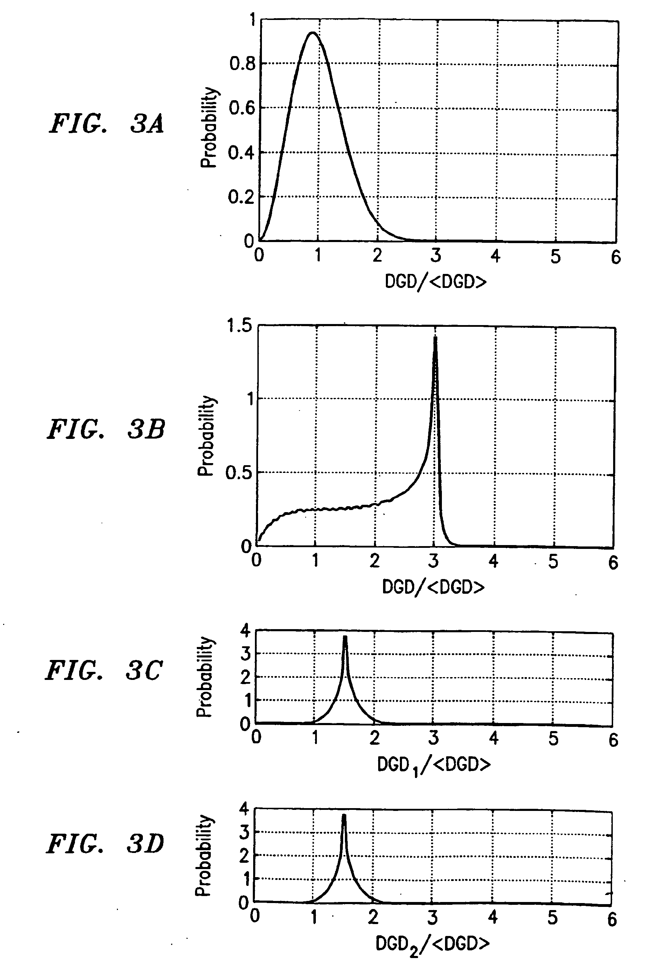

The instant PMD of a link can be represented by a vector, $\Omega$, whose length equals the differential-group-delay (DGD) between two principle states of polarization (PSPs) of the fiber link, and whose direction is aligned with the maximum delay PSP. Generally, the distribution of DGD follows Maxwellian distribution, as shown in the plot of FIG. 3A. At some rare occasions (toward the tail of the Maxwellian distribution), instant $|\Omega|$ can be much larger than the average link DGD, $\overline{\Omega}$ (or <DGD>), resulting in a large penalty. Outage probability (OP) is commonly used to assess the probability of having PMD penalty larger than a pre-allocated amount (e.g., 2 dB in required OSNR). It is desirable to have the OP as small as possible.

Numerical simulations have shown that OP can be reduced by using D-FPSs in accordance with embodiments of the invention. As illustrated in FIG. 3B, given an outage event during which the instant $|\Omega_0|=3\overline{\Omega}$, $|\Omega|$ is redistributed by inserting an FPS at the middle of the link. The new distribution is obtained as follows. We first find all the possible pairs of PMD vectors of the first and second half of the link, $\Omega_1$ and $\Omega_2$, that satisfy $\Omega_1+\Omega_2=\Omega$, and their occurrence probabilities. The distributions of $|\Omega_1|$ and $|\Omega_2|$ are shown in Figs. 3C-D. For each ($\Omega_1$, $\Omega_2$) pair, we rotate $\Omega_1$ on the Poincare sphere with all possible states uniformly sampled (to emulate the function of the FPS), and sum it with $\Omega_2$ to obtain a new link PMD vector, $\Omega_{new}$. The distribution of $|\Omega_{new}|$ is then obtained by calculating the relative probabilities of all the sampled DGD values and re-normalizing them. Clearly, the new distribution is no longer isolated around $3\overline{\Omega}$, but has a substantial portion around $\overline{\Omega}$.

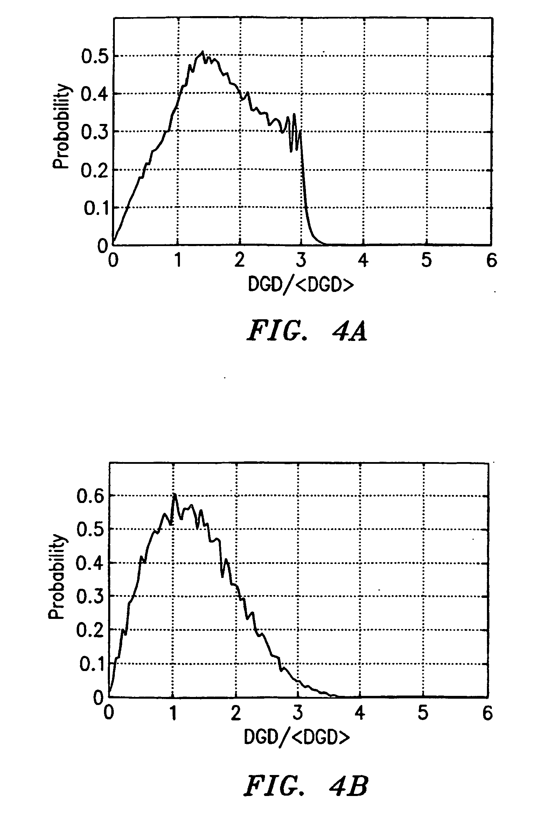

The above process was repeated for cases with 2 or more distributed FPSs 208. FIGS. 4A-B show the new DGD distribution with 2 and 6 uniformly distributed FPSs, respectively. With an increased number of FPSs 208, the DGD distribution becomes closer to the original Maxwellian distribution. It can be appreciated by those skilled in the art that the DGD distribution of the i-th section, $|\Omega_i|$, is likely to be distributed around $|\Omega|/(N+1)$ (N being the total number of D-FPSs) providing that $|\Omega|/(N+1)>\overline{\Omega}/(N+1)^{1/2}$, since the Maxwellian distribution strongly favors that $|\Omega_i|$ be close to $\overline{\Omega}/(N+1)^{1/2}$. With D-FPS, the new link $\Omega$ can be seen as the quadratic summation of all the sectional PMD vectors, and its mean value can be approximated as

$$\overline{\Omega}_{new} \approx \max(\overline{\Omega}, |\Omega_0|/\sqrt{N+1}). \qquad (1)$$

As N becomes sufficiently large, the new mean link PMD approaches $\Omega$. This qualitatively explains the convergence of the new link DGD distribution from an outage event to its original Maxwellian distribution through the use of D-FPSs.

D-FPS Speed Requirement For Outage Prevention

To effectively redistribute the link DGD during an outage event to the original Maxwellian distribution, the speed requirement of FPSs 208, which is closely related to the FEC code used and the system data rate, is an important parameter. Generally, a FEC code is capable of correcting $N_{max\_frame}$ maximum number of errors per FEC frame, and $N_{max\_burst}$ maximum number of consecutive burst errors. RS-FEC has an advantageous feature that $N_{max\_burst}$ equals $N_{max\_frame}$. In one version of ITU's recommended FEC (G.709 standard), RS (255,239) code with an interleaving depth of 16 is used, resulting in $N_{max\_burst} = N_{max\_frame} = 8 \times 16$ bytes (or 1024 bits). The corresponding burst-error-correcting-period (BECP) of is about 0.1 $\mu$s for 10-Gb/s systems (0.025 $\mu$s for 40-Gb/s systems). To change the state of polarization at least once during each BECP, the speed of FPS needs to be greater than about 10 MHz, and greater than about 40 MHz, for 10-Gb/s and 40-Gb/s systems, respectively. LiNbO$_3$ based PSs are capable of polarization scrambling with speeds of up to a few GHz, and may be used in accordance with the invention. Using advanced FEC codes with large burst-error-correction capability, the speed requirements of the FPSs 208 speed may be relaxed.

The performance improvement through the use of D-FPSs was accessed and is discussed below. The PMD-induced OP assuming idealized or sufficient PMD scrambling which redistributed the link DGD to the original Maxwellian distribution was considered. It was understood that there is a small probability that PMD outages may occur even after the PMD scrambling through N D-FPSs where the new link DGD is still large enough to cause system outage (or it is still larger than the specific $|\Omega|$). We can write the new OP (after sufficient PMD scrambling, OP$_{sufficient}$) as

$$OP_{sufficient}(N) = M\{\overline{\Omega} + [M^{-1}(OP_0) - \overline{\Omega}] \cdot \sqrt{N+1}\}, \qquad (2)$$

where M(x) is the probability of obtaining DGD that is larger than x assuming the DGD is Maxwellian distributed with mean of $\overline{\Omega}$, or

$$M(x) = \int_{x}^{+\infty} \frac{32x^2}{\pi^2 \overline{\Omega}^3} \exp(-\frac{4x^2}{\pi \overline{\Omega}^2}) dx . \qquad (3)$$

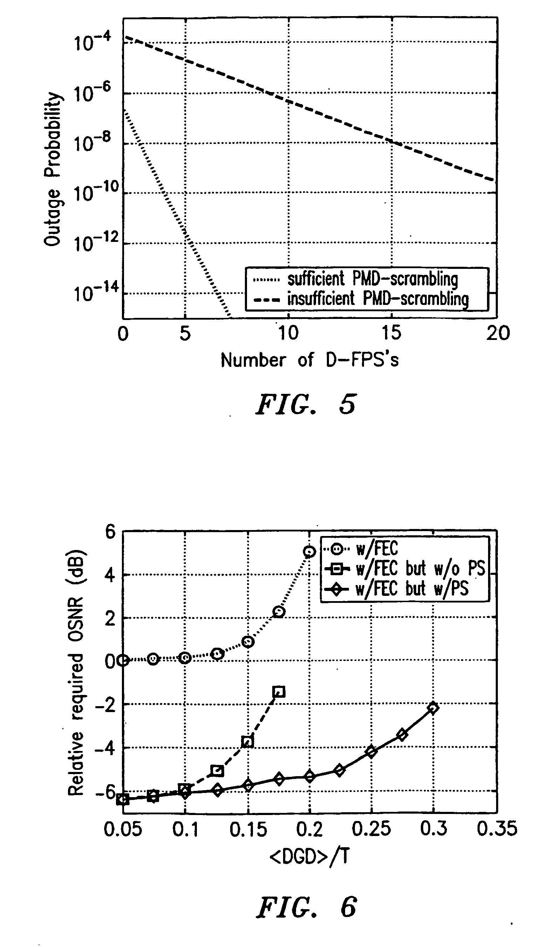

$M^{-1}(y)$ is the inverse function of M(x). Fig. 5 shows the dependence of the new OP on N for assuming the original OP to be $10^{-3}$ (dotted line for sufficient PMD scrambling). The new OP is substantially reduced with the increase of N. More than ten orders of magnitude of reduction in OP may be achieved with about 10 D-FPSs. This idealized model gives an upper limit of the outage prevention performance.

The performance of the outage prevention under insufficient polarization scrambling speed is of practical interest. The impact of insufficient scrambling speed is the reduction of the effective number of D-FPSs. We can extend Eq. (3) to take into consideration the impact as

$$OP_{insufficient}(N) \approx \sum_{m=0}^{N} OP_{sufficient}(m) \binom{N}{m} p^m (1-p)^{N-m} \qquad (4)$$

where p is the ratio between the actual PS speed and the required speed. For example, p=0.8 for FPS with 8-MHz speed in 10-Gb/s systems. The outage prevention performance with p=0.8 is shown with a dashed line in Fig. 5. While insufficient FPS speed strongly degrades the performance, OP can still be significantly reduced from $10^{-3}$ to $<10^{-9}$ with 20 D-FPSs. As can be understood from the above results, the present invention provides for the effective elimination of PMD-induced system outages.

Improvement Of PMD Tolerance

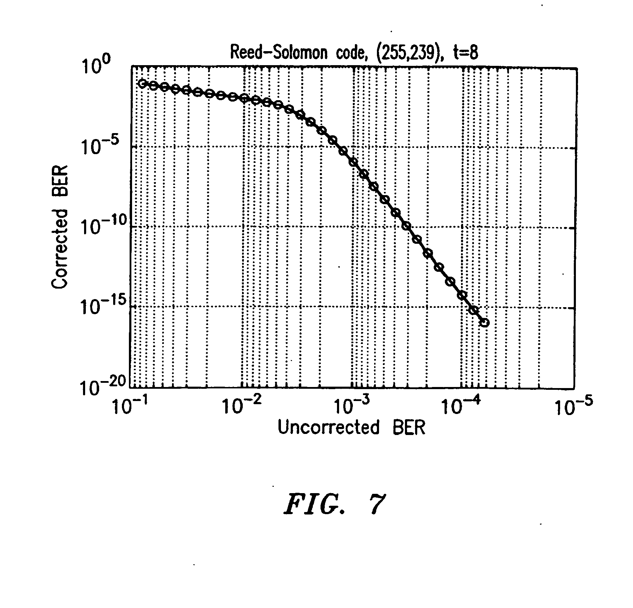

The dependence of OSNR penalty on PMD is important to evaluate the system tolerance to PMD. FIG. 6 shows the relative required OSNR (as compared to that without FEC and without PMD) for achieving a BER of $10^{-15}$ as a function of mean link PMD in a conventional non-return-to-zero (NRZ) on-off-keyed (OOK) transmission system. When no FEC is used, the decision threshold and phase are optimized on a bit-by-bit basis or optimized for each case of instant link PMD, assuming the link PMD is slow varying and the receiver can track the change. OSNR penalty of 2 dB occurs as the mean system DGD reaches about 17% of the bit period (T). When RS-FEC is used, the decision threshold and phase are optimized on a frame-by-frame basis for each mean link PMD. FEC provides about 6.5 dB improvement over OSNR requirement. With the increase of PMD, there is substantial difference in PMD tolerance between the cases without and with D-FPSs. The PMD tolerance (at 2-dB penalty) of system with FEC and D-FPSs is about 0.24T, about 70% larger than that with FEC but without D-FPSs. It is noted that such performance improvement cannot be achieved by simply putting an FPS at the transmitter, which cannot avoid "bad" link PMDs. Also the PMD tolerance with FEC but without D-FPSs is smaller than without FEC. This is because of the "nonlinear" dependence of the corrected BER (by FEC) on the uncorrected BER, which normally results in much larger increase in the corrected BER when the uncorrected BER is only slightly increased (due to PMD), as shown in Fig. 7. It is thus very beneficial to take the advantage offered by D-FPSs in systems in which FEC is implemented.

The PMD tolerance is further increased when more powerful FEC codes (i.e. those having a higher uncorrected BER threshold than RS-FEC for a given corrected BER) are used with the present invention, providing the criteria for sufficient PMD scrambling is met. It can be understood by those skilled in the art that the present invention is applicable to systems and transmission methods employing various FEC codes including but not limited to Reed-Solomon codes, concatenated block codes, convolutional codes and codes with various interleaved depth.

In addition, the present invention is also applicable to systems employing non-return-to-zero (NRZ) or return-to-zero (RZ) signal formatting, and/or on-off keying, differential phase-shift-keying (DPSK), differential quadrature-phase-shift-keying (DQPSK) modulation formatting, or the like. Additionally, the tolerance to PDL and PDG can be significantly improved with the use of D-FPSs in systems with FEC. As discussed above with regard to PMD mitigation, the present invention is effective in substantially reducing the PDL and PDG induced outages by quickly redistributing the link PDL and PDG to allow FEC to correct transmission errors, substantially reducing outage probability.

We note that polarization scramblers also scramble the phases of the signal bits, and polarizing scrambling with very high speed (comparable to the data rate, BR) may cause large signal spectrum broadening (e.g., about two times the spectrum of the transmitted signal) and penalty. It is therefore preferable that the PS speed (i.e. approximately the inverse of the time period for a $\pi$ phase change of the signal) is between about 0.5BR/FEC-BECL (the minimum requirement for sufficient PMD scrambling) and about BR/N (e.g., 1 GHz for a 10 Gb/s system (4GHz for a 40 Gb/s system) with 10 D-FPSs and ITU G.709 recommended RS-FEC).

For systems employing on-off-keying the PS speed is preferably between about 0.5BR/FEC-BECL and the lesser of about BR/(8 x ID) and about BR/N, where BR is the system bit rate, FEC-BECL is the forward error correction burst error correction length, ID is the interleaving depth of the forward error correction, and N is the number of polarization scramblers.

For systems employing DPSK modulation formatting the PS speed is preferably between about 0.5BR/FEC-BECL and the lesser of about BR/(8 x ID) and about 0.1BR/N, where BR is the system bit rate, FEC-BECL is the forward error correction burst error correction length, ID is the interleaving depth of the forward error correction, and N is the number of polarization scramblers.

Additionally, it can be appreciated by those skilled in the art that one advantage of the present invention over PMDC is that the present invention does not require polarization monitoring and feedback control, and can operate in a set-and-forget mode.

Although the invention has been described with reference to illustrative embodiments, this description should not be construed in a limiting sense.

## Claims

1. An optical transmission system (20) employing forward error correction comprising:

   at least one polarization scrambler positioned along a transmission link (205);
   wherein the at least one polarization scrambler (208) is adapted to vary the polarization state of an optical signal to vary the polarization mode dispersion (PMD) experienced by the signal at least once during each burst-error-correcting-period of the forward error correction employed by the system, and
   wherein the at least one polarization scrambler varies the polarization state of the optical signal at a speed that is between about 0.5BR/FEC-BECL and about BR/N, where BR is the system bit rate, FEC-BECL is the forward error correction burst error correction length and N is the number of polarization scramblers along the link.

2. The optical transmission system of claim 1 wherein the at least one polarization scrambler is uniformly distributed along the link.

3. The optical transmission system of claim 1 wherein the at least one polarization scrambler is positioned along the link based on the PMD values of spans within the link.

4. The optical transmission system of claim 1 wherein the at least one polarization scarmbler is positioned along the links in locations with relatively high signal power to substantially minimize OSNR degradation due to loss from said at least one polarization scrambler.

5. The optical transmission of claim 1 wherein the at least one polarization scrambler varies the polarization state of the optical signal at a speed that is between about 0.5BR/FEC-BECL and the lesser of about BR/(8 x ID) and about BR/N, where BR is the system bit rate, FEC-BECL is the forward error correction burst error correction length, ID is the interleaving depth and N is the number of polarization scramblers along the link.

6. A method for optical transmission in a multi-channel system (20) employing forward error correction comprising, varying polarization state of an optical signal using one or more polarization scramblers (208) positioned along a transmission link (205) of the system (20) to effectively vary the polarization mode dispersion experienced by the optical signal at least once during each burst-error-correction-period of the forward error correction employed by the system,
wherein, at least one polarization scrambler varies the polarization state of the optical signal at a speed that is between about 0.5BR/FEC-BECL and about BR/N, where BR is the system bit rate, FEC-BECL is the forward error correction burst error correction length, and N is the number of polarization scramblers along the link.

7. The method of claim 6 wherein the transmission system employs differential phase-shift-keying modulation formatting wherein the polarization state is varied using one or more polarization scrambler, at a speed of between about 0.5BR/FEC-BECL and the lesser of about BR/(8 X ID) and about BR/N, where BR is the system bit rate, FEC-BECL is the forward error correction burst error correction length, ID is the interleaving depth and N is the number of polarization scramblers along the link.

8. The method of claim 6 wherein the transmission system employs differential phase-shift-keying modulation formatting-wherein the polarization-state is varied using one or more polarization scramblers,
at a speed of between about 0.5BR/FEC-BECL and about BR/N, where BR is the system bit rate, FEC-BECL is the forward error correction burst error correction length, and N is the number of polarization scramblers along the link.

9. An apparatus for transmitting optical signals in a system (20) employing forward error correction comprising,
a means (208) positioned along a transmission link (205) of the system (20) for varying the state of polarization of transmitted optical signals at least once during each burst-error-correction-period of the forward error correction code employed by the system,
wherein the speed of one or more of the polarization state varying means is between about 0.5BR/FEC-BECL and about BR/N, where BR is the system bit rate, FEC-BECL is the forward error correction burst error correction length, and N is the number of said means for varying the state of polarization along the link.

10. The apparatus of claim 9
wherein the speed of one or more of the polarization state varying means is between about 0.5BR/FEC-BECL and the lesser of about BR/(8 x ID) and about BR/N, where BR is the system bit rate, FEC-BECL is the forward error correction burst error correction length, ID is the depth of interleaving and N is the number of said means for varying the state of polarization along the link.

**Patentansprüche**

1. Optisches Übertragungssystem (20) mit Vorwärtsfehlerkorrektur, mit folgendem:

mindestens einem entlang einer Übertragungsstrecke (250) positionierten Polarisationsverwürfler;
wobei der mindestens eine Polarisationsverwürfler (208) den Polarisationszustand eines optischen Signals verändern kann, um die durch das Signal erfahrene Polarisationsmodendispersion (PMD) mindestens einmal während jeder Burstfehlerkorrekturperiode der durch das System eingesetzten Vorwärtsfehlerkorrektur zu verändern, und
wobei der mindestens eine Polarisationsverwürfler den Polarisationszustand des optischen Signals mit einer Geschwindigkeit verändert, die zwischen rund 0,5 BR/FEC-BECL und rund BR/N liegt, wobei BR die Systembitrate, FEC-BECL die Vorwärtsfehlerkorrektur-Burstfehlerkorrekturlänge und N die Anzahl von Polarisationsverwürflern entlang der Strecke ist.

2. Optisches Übertragungssystem nach Anspruch 1, wobei der mindestens eine Polarisationsverwürfler gleichförmig entlang der Strecke verteilt ist.

3. Optisches Übertragungssystem nach Anspruch 1, wobei der mindestens eine Polarisationsverwürfler auf Grundlage der PMD-Werte von Spannen innerhalb der Strecke entlang der Strecke positioniert ist.

4. Optisches Übertragungssystem nach Anspruch 1, wobei der mindestens eine Polarisationsverwürfler an Stellen mit relativ hoher Signalleistung entlang den Strecken positioniert ist, um OSNR-Verschlechterung aufgrund von Verlust von dem mindestens einen Polarisationsverwürfler im wesentlichen zu minimieren.

5. Optische Übertragung nach Anspruch 1, wobei der mindestens eine Polarisationsverwürfler den Polarisationszustand des optischen Signals mit einer Geschwindigkeit verändert, die zwischen rund 0,5 BR/FEC-BECL und dem geringeren von rund BR/(8xID) und rund BR/N liegt, wobei BR die Systembitrate, FEC-BECL die Vorwärtsfehlerkorrektur-Burstfehlerkorrekturlänge, ID die Verschachtelungstiefe und N die Anzahl von Polarisationsverwürflern entlang der Strecke ist.

6. Verfahren zur optischen Übertragung in einem Mehrkanalsystem (20) mit Vorwärtsfehlerkorrektur, mit folgendem:

   Ändern des Polarisationszustandes eines optischen Signals unter Verwendung von einem oder mehreren entlang einer Übertragungsstrecke (205) des Systems (20) positionierten Polarisationsverwürflern (208) zum effektiven Verändern der durch das optische Signal erfahrenen Polarisationsmodendispersion mindestens einmal während jeder Burstfehlerkorrekturperiode der durch das System eingesetzten Vorwärtsfehlerkorrektur,
   wobei mindestens ein Polarisationsverwürfler den Polarisationszustand des optischen Signals mit einer Geschwindigkeit verändert, die zwischen rund 0,5 BR/FEC-BECL und rund BR/N liegt, wobei BR die Systembitrate, FEC-BECL die Vorwärtsfehlerkorrektur-Burstfehlerkorrekturlänge und N die Anzahl von Polarisationsverwürflern entlang der Strecke ist. '

7. Verfahren nach Anspruch 6, wobei das Übertragungssystem differentielle Phasenumtastungsmodulationsformatierung benutzt, wobei der Polarisationszustand unter Verwendung eines oder mehrerer Polarisationsverwürfler mit einer Geschwindigkeit von zwischen rund 0,5 BR/FEC-BECL und dem geringeren von rund BR/(8xID) und rund BR/N verändert wird, wobei BR die Systembitrate, FEC-BECL die Vorwärtsfehlerkorrektur-Bizrstfehlerkorrekturlänge, ID die Verschachtelungstiefe und N die Anzahl von Polarisationsverwürflern entlang der Strecke ist.

8. Verfahren nach Anspruch 6, wobei das Übertragungssystem differentielle Phasenumtastungsmodulationsformatierung benutzt, wobei der Polarisationszustand unter Verwendung eines oder mehrerer Polarisationsverwürfler verändert wird,
   mit einer Geschwindigkeit von zwischen rund 0,5 BR/FEC-BECL und rund BR/N, wobei BR die Systembitrate, FEC-BECL die Vorwärtsfehlerkorrektur-Burstfehlerkorrekturlänge und N die Anzahl von Polarisationsverwürflern entlang der Strecke ist.

9. Vorrichtung zum Übertragen von optischen Signalen in einem System (20) mit Vorwärtsfehlerkorrektur, mit folgendem:

   einem entlang einer Übertragungsstrecke (205) des Systems (20) positionierten Mittel (208) zum Verändern des Polarisationszustandes von übertragenen optischen Signalen mindestens einmal während jeder Burstfehlerkorrekturperiode des vom. System eingesetzten Vorwärtsfehlerkorrekturcodes,
   wobei die Geschwindigkeit von einem oder mehreren der Polarisationszustandveränderungsmittel zwischen rund 0,5 BR/FEC-BECL und rund BR/N, liegt,
   wobei BR die Systembitrate, FEC-BECL die Vorwärtsfehlerkorrektur-Burstfehlerkörrekturlänge und N die Anzahl der Mittel zum Verändern des Polarisationszustandes entlang der Strecke ist.

10. Vorrichtung nach Anspruch 9, wobei die Geschwindigkeit eines oder mehrerer der Polarisationszustandveränderungsmittel zwischen rund 0,5 BR/FEC-BECL und dem geringeren von rund BR/(8xID) und rund BR/N liegt, wobei BR die Systembitrate, FEC-BECL die Vorwärtsfehlerkorrektur-Burstfehlerkorrekturlänge, ID die Verschachtelungstiefe und N die Anzahl der Mittel zum Verändern des Polarisationszustandes entlang der Strecke ist.

**Revendications**

1. Système de transmission optique (20) employant la correction d'erreurs anticipée comprenant :

   au moins un brouilleur de polarisation positionné le long d'une liaison de transmission (205) ;
   dans lequel l'au moins un brouilleur de polarisation (208) est adapté pour faire varier l'état de polarisation d'un signal optique afin de faire varier la dispersion de mode de polarisation (PMD) subie par le signal au moins une fois durant chaque période de correction d'erreur de rafale de la correction d'erreurs anticipée employée par le système, et
   dans lequel l'au moins un brouilleur de polarisation fait varier l'état de polarisation du signal optique à une vitesse qui est comprise entre environ 0,5 BR/FEC-BECL et environ BR/N, où BR est le débit binaire du système, FEC-BECL est la longueur de correction d'erreur de rafale de la correction d'erreurs anticipée, et N est le nombre de brouilleurs de polarisation le long de la liaison.

2. Système de transmission optique selon la revendication 1, dans lequel l'au moins un brouilleur de polarisation est distribué uniformément le long de la liaison.

3. Système de transmission optique selon la revendication 1, dans lequel l'au moins un brouilleur de polarisation est positionné le long de la liaison en fonction des valeurs de PMD de portées au sein de la liaison.

4. Système de transmission optique selon la revendication 1, dans lequel l'au moins un brouilleur de polarisation est positionné le long des liaisons à des endroits ayant une puissance de signal relativement élevée pour sensiblement minimiser la dégradation OSNR due à la perte depuis ledit au moins un brouilleur de polarisation.

5. Système de transmission optique selon la revendication 1, dans lequel l'au moins un brouilleur de polarisation fait varier l'état de polarisation du signal optique à une vitesse qui est comprise entre environ 0,5 BR/FEC-BECL, et la plus petite d'environ BR/(8 x ID) et d'environ BR/N, où BR est le débit binaire du système, FEC-BECL est la longueur de correction d'erreur de rafale de la correction d'erreurs anticipée, ID est la profondeur d'entrelacement et N est le nombre de brouilleurs de polarisation le long de la liaison.

6. Procédé de transmission optique dans un système à canaux multiples (20) employant la correction d'erreurs anticipée comprenant,
   la variation de l'état de polarisation d'un signal optique au moyen d'un ou de plusieurs brouilleurs de polarisation (208) positionnés le long d'une liaison de transmission (205) du système (20) afin de faire varier efficacement la dispersion de mode de polarisation subie par le signal optique au moins une fois durant chaque période de correction d'erreur de rafale de la correction d'erreurs anticipée employée par le système,
   dans lequel au moins un brouilleur de polarisation fait varier l'état de polarisation du signal optique à une vitesse qui est comprise entre environ 0,5 BR/FEC-BECL et environ BR/N, où BR est le débit binaire du système, FEC-BECL est la longueur de correction d'erreur de rafale de la correction d'erreurs anticipée, et N est le nombre de brouilleurs de polarisation le long de la liaison.

7. Procédé selon la revendication 6, dans lequel le système de transmission emploie un formatage de modulation par déplacement de phase différentiel dans lequel l'état de polarisation est varié en utilisant un ou plusieurs brouilleurs de polarisation, à une vitesse qui est comprise entre environ 0,5 BR/FEC-BECL, et la plus petite d'environ BR/(8 x ID) et d'environ BR/N, où BR est le débit binaire du système, FEC-BECL est la longueur de correction d'erreur de rafale de la correction d'erreurs anticipée, ID est la profondeur d'entrelacement et N est le nombre de brouilleurs de polarisation le long de la liaison.

8. Procédé selon la revendication 6, dans lequel le système de transmission emploie un formatage de modulation par déplacement de phase différentiel dans lequel l'état de polarisation est varié en utilisant un ou plusieurs brouilleurs de polarisation,
   à une vitesse qui est comprise entre environ 0,5 BR/FEC-BECL, et environ BR/N, où BR est le débit binaire du système, FEC-BECL est la longueur de correction d'erreur de rafale de la correction d'erreurs anticipée et N est le nombre de brouilleurs de polarisation le long de la liaison.

9. Appareil de transmission de signaux optiques dans un système (20) employant la correction d'erreurs anticipée comprenant,
   un moyen (208) positionné le long d'une liaison de transmission (205) du système (20) pour faire varier l'état de polarisation de signaux optiques transmis au moins une fois durant chaque période de correction d'erreur de rafale du code de correction d'erreurs anticipée employé par le système,

dans lequel la vitesse d'un ou de plusieurs des moyens de variation de l'état de polarisation est comprise entre environ 0,5 BR/FEC-BECL et environ BR/N, où BR est le débit binaire du système, FEC-BECL est la longueur de correction d'erreur de rafale de la correction d'erreurs anticipée, et N est le nombre desdits moyens pour faire varier l'état de polarisation le long de la liaison.

10. Appareil selon la revendication 9

dans lequel la vitesse d'un ou de plusieurs des moyens de variation de l'état de polarisation est comprise entre environ 0,5 BR/FEC-BECL, et la plus petite d'environ BR/(8 x ID) et d'environ BR/N, où BR est le débit binaire du système, FEC-BECL est la longueur de correction d'erreur de rafale de la correction d'erreurs anticipée, ID est la profondeur d'entrelacement et N est le nombre desdits moyens pour faire varier l'état de polarisation le long de la liaison.

*FIG. 1A*

Number of errors after correction / Time

$N_{max\_frame}$

$N_{max\_burst}$

*FIG. 1B*

Number of errors after correction / Time

PMD outages

*FIG. 1C*

under sufficient PMD scrambling by D-FPS's.

Number of errors after correction / Time

$N_{max\_burst}$

*FIG. 1D*

Number of errors after correction / Time

PMD-induced OP is dramatically reduced.

FIG. 2

EP 1 507 346 B1

*FIG. 3A*

*FIG. 3B*

*FIG. 3C*

*FIG. 3D*

**FIG. 4A**

**FIG. 4B**

*FIG. 5*

*FIG. 6*

FIG. 7